# FASCICULE DE BREVET EUROPEEN

(11) **EP 1 762 490 B1**
(45) Date de publication et mention de la délivrance du brevet: **21.05.2008**
(21) Numéro de dépôt: 06291387.6
(22) Date de dépôt: 01.09.2006
(51) Int. Cl.: B64D 11/06

(54) **Dispositif de montage d'un siège sur un rail de montage**
Vorrichtung zur Befestigung eines Sitzes in einer Sitzschiene
Device for mounting a seat in a seat rail

(30) Priorité: 07.09.2005 FR 0509118
(43) Date de publication de la demande: 14.03.2007
(73) Titulaire: Société Industrielle et Commerciale de Matériel Aéronautique, F-36100 Issoudun (FR)
(72) Inventeur: Legeay, Alexis, 36100 Les Bordes (FR)
(74) Mandataire: Bredema

(56) Documents cités:
- DE-A1- 10 337 746
- DE-U1- 29 825 000
- US-A- 4 062 298
- US-A- 4 496 271
- US-B1- 6 902 365

## Description

La présente invention concerne un dispositif de montage d'un siège sur un rail de montage, ledit rail comprenant une paroi de fond, deux parois latérales et deux ailes qui délimitent une rainure en forme de T inversé, lesdites ailes formant à des intervalles réguliers des encoches délimitant une alternance d'emplacements où le passage entre les bords des ailes est élargi et d'emplacements où le passage entre les bords des ailes est rétréci, et plus particulièrement un tel dispositif comprenant :
- une embase munie de moyens de liaison à un siège et d'au moins un plongeur de blocage longitudinal apte à s'engager dans un desdits emplacements où le passage est élargi mais pas à se déplacer longitudinalement dans un emplacement où le passage est rétréci ;
- un coulisseau muni de saillies comportant des lèvres latérales, ledit coulisseau étant agencé pour coulisser par rapport à ladite embase avec lesdites saillies dans ledit rail, entre une position de mise en place où lesdites lèvres peuvent s'engager dans un desdits emplacements où le passage est élargi lorsque le plongeur de l'embase est dans un tel emplacement, et une position de blocage où lesdites lèvres sont retenues par lesdites ailes dans un emplacement où le passage est rétréci.

De tels rails et de tels dispositifs de montage sont connus dans la technique, notamment dans les aéronefs.
Le document US-B1-6 902 365 montre un dispositif de montage d'un siège sur un rail de montage selon le préambule de la revendication 1.
Le document DE 298 25 000 U1 montre un dispositif de montage d'un siège comprenant un levier de manoeuvre, un axe, une fente allongée et des moyens de verrouillage. Les saillies de ce dispositif ne coulissent pas avec le coulisseau et le levier de commande est également agencé pour relever/abaisser un plongeur.

On connaît par exemple par le document US-A-5975822 un système du même type. Le système comprend ici un embase et un téton en liaison pivot d'axe normal par rapport au rail. L'embase comprend un tenon pour la liaison pivot avec le pied du siège et des plongeurs pour assurer le blocage horizontal. Le téton comprend deux lèvres pour assurer le blocage vertical, disposées de façon que lorsqu'on tourne d'un quart de tour le téton, il ne puisse être délogé du rail. Pour verrouiller le système, il suffit donc de placer l'embase dans le rail et de tourner le téton d'un quart de tour.

On connaît également par le document US-A-4496271 un dispositif tel que décrit ci-dessus. Ce document décrit un système de fixation de siège sur un rail d'avion sans déplacement du siège dans le rail. Le système comprend une embase et un coulisseau en liaison glissière l'un par rapport à l'autre. L'embase comprend un tenon pour la liaison pivot avec le pied du siège et des plongeurs pour assurer le blocage horizontal. Le coulisseau comprend des lèvres pour assurer le blocage vertical. Pour verrouiller le système, il suffit donc de placer l'embase dans le rail et de coulisser le coulisseau d'un demi-pas.

Ce dernier dispositif présente toutefois l'inconvénient que les dispositifs de blocage du coulisseau sont complexes, peu fiables et difficiles à mettre en oeuvre.

La présente invention vise à pallier ces inconvénients.

Plus particulièrement, l'invention a pour but de fournir un dispositif de montage d'un siège sur un rail de montage qui permette de monter, verrouiller et démonter rapidement un siège sur des rails avions :
- sans mouvement du siège,
- avec peu de manipulations,
- sans outil spécifique pour assurer le blocage,
- sans ajustement,
- avec un blocage de sécurité,
- avec un indicateur de verrouillage du système.

A cet effet, l'invention a tout d'abord pour objet un dispositif de montage d'un siège sur un rail de montage, ledit rail comprenant une paroi de fond, deux parois latérales et deux ailes qui délimitent une rainure en forme de T inversé, lesdites ailes formant à des intervalles réguliers des encoches délimitant une alternance d'emplacements où le passage entre les bords des ailes est élargi et d'emplacements où le passage entre les bords des ailes est rétréci, ledit dispositif comprenant :
- une embase munie de moyens de liaison à un siège et d'au moins un plongeur de blocage longitudinal apte à s'engager dans un desdits emplacements où le passage est élargi mais pas à se déplacer longitudinalement dans un emplacement où le passage est rétréci ;
- un coulisseau muni de saillies comportant des lèvres latérales, ledit coulisseau étant agencé pour coulisser par rapport à ladite embase avec lesdites saillies dans ledit rail, entre une position de mise en place où lesdites lèvres peuvent s'engager dans un desdits emplacements où le passage est élargi lorsque le plongeur de l'embase est dans un tel emplacement, et une position de blocage où lesdites lèvres sont retenues par lesdites ailes dans un emplacement où le passage est rétréci ; ce dispositif comprenant en outre :

- un levier de manoeuvre articulé sur ladite embase et sur ledit coulisseau, l'une au moins des articulations s'effectuant à l'aide d'un axe monté sur l'un des éléments articulés et coulissant dans une fente allongée de l'autre élément, ledit levier étant ainsi mobile entre une position d'ouverture où le coulisseau est dans sa position de mise en place et une position de fermeture où le coulisseau est dans sa position de blocage ;
- des moyens de verrouillage pour verrouiller ledit levier dans sa position de fermeture.

Dans un mode de réalisation particulier, des moyens de rattrapage de jeu pour rattraper les jeux existant entre le rail et le dispositif lorsque le coulisseau passe de sa position de mise en place à sa position de blocage.

Plus particulièrement, lesdits moyens de rattrapage de jeu peuvent comprendre une butée élastique pour ledit axe coulissant.

Encore plus particulièrement, ladite butée élastique peut être disposée dans un élargissement à l'extrémité de ladite fente allongée où se déplace ledit axe coulissant lorsque ledit coulisseau arrive dans sa position de blocage.

Egalement dans un mode de réalisation particulier, lesdits moyen de verrouillage comprennent une lame élastique montée sur l'embase et apte à coopérer avec au moins un crochet solidaire du levier de manoeuvre.

Egalement dans un mode de réalisation particulier, des moyens de déverrouillage sont prévus pour déverrouiller ledit levier de sa position de fermeture.

Plus particulièrement, lesdits moyens de déverrouillage peuvent comprendre une came qui, dans une de ses positions, permet à la lame élastique de reposer au fond dudit crochet, et dans une autre position, repousse la lame élastique à l'extérieur du crochet.

Encore plus particulièrement, ladite came peut être un excentrique susceptible d'être entraîné en rotation à l'aide d'une clé entre ses dites positions.

La présente invention a également pour objet un aéronef comprenant un dispositif tel que décrit ci-dessus pour le montage de ses sièges.

On décrira maintenant, à titre d'exemple non limitatif, des modes de réalisation particuliers de l'invention, en référence aux dessins schématiques annexés dans lesquels :
- la figure 1 est une vue en perspective d'un tronçon de rail pour le montage d'un siège d'aéronef à l'aide d'un dispositif selon l'invention ;
- la figure 2 est une vue en perspective éclatée d'un dispositif selon l'invention ;
- les figures 3a et 3b sont des vues en perspective de ce dispositif selon l'invention, respectivement en position ouverte et en position fermée ;
- la figure 4 est une vue en perspective à plus grande échelle d'une partie de ce dispositif ;
- la figure 5 est une vue en coupe longitudinale de ce dispositif ; et
- la figure 6 est une vue en perspective d'une variante de ce dispositif.

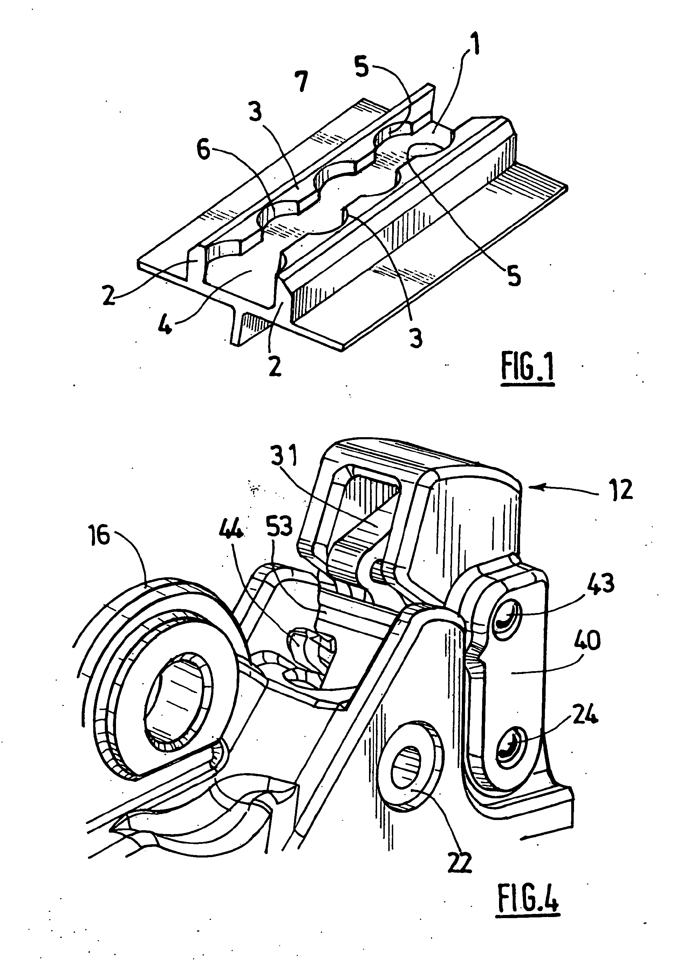

On voit à la figure 1 un rail typique de montage de sièges passagers à bord d'une cabine d'aéronef. Ce rail est constitué d'un profilé métallique dans lequel une paroi de fond 1, deux parois latérales 2 et deux ailes 3 généralement parallèles à la paroi de fond 1 délimitent une rainure 4 en forme de T inversé. Des encoches 5 sont formées à intervalles réguliers dans les ailes 3 de sorte que le passage délimité entre les bords des ailes présente une alternance d'emplacements élargis 6 et d'emplacements rétrécis 7

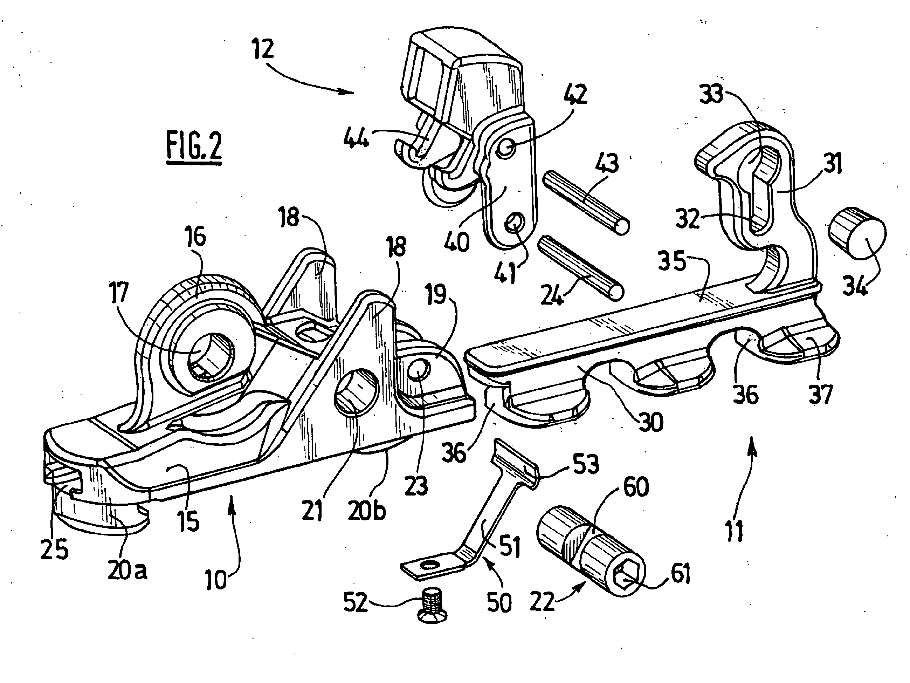

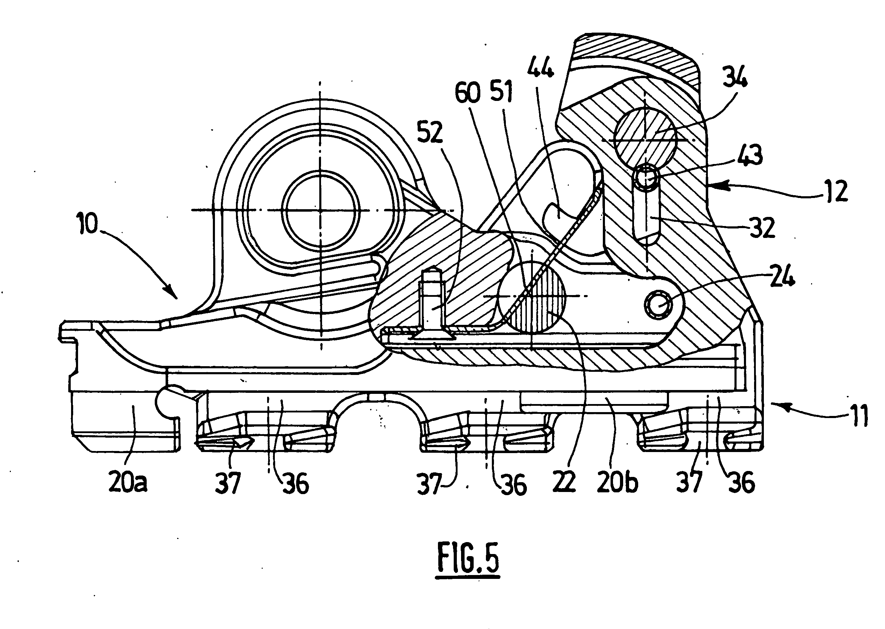

On se référera maintenant aux figures 2 à 5.

Un dispositif selon l'invention comprend pour l'essentiel une embase 10, un coulisseau 11 et un levier de manoeuvre 12.

L'embase 10 comprend une semelle 15 supportant à sa partie opposée au rail, en premier lieu une ferrure 16 percée d'un trou 17 permettant d'articuler l'embase sur une chape (non représentée) solidaire d'un siège. La semelle 15 supporte également, du même côté que la ferrure 16, deux joues 18 formant butées pour le levier 12 comme cela sera vu ci-après, et une chape d'articulation 19 pour le levier. Enfin, la semelle supporte sur son autre face, deux plongeurs 20a et 20b, le plongeur 20b situé sensiblement en vis-à-vis de la chape 19 de l'autre côté de la semelle présentant une extension moindre dans la direction perpendiculaire au plan de la semelle 15.

Les joues 18 comportent des trous 21 pour le logement d'un organe de déverrouillage 22 qui sera décrit ci-après. La chape 19 comporte des trous 23 pour le passage d'un axe 24 d'articulation du levier de manoeuvre 12.

L'embase forme enfin une rainure 25 en T ouverte du côté du rail, dont la fonction sera exposée ci-après.

Le coulisseau 11 comporte un corps 30 supportant du côté opposé au rail, une ferrure 31 munie d'une fente 32 allongée généralement dans la direction perpendiculaire au rail. La fente 32 se termine, à son extrémité la plus éloignée du rail, par un orifice cylindrique 33 de diamètre supérieur à la largeur de la fente, recevant un cylindre 34 en matériau élastique dont la fonction sera exposée ci-après.

Du même côté que la ferrure 31, le corps 30 du coulisseau 11 supporte une glissière 35 en T complémentaire de la rainure 25, permettant au coulisseau 11 de coulisser par rapport à l'embase 10.

Du côté du rail, le corps 30 du coulisseau 11 supporte une pluralité de saillies 36, ici trois, en forme de T inversé sensiblement complémentaire de celle de la rainure 4 du rail. Les saillies 36 comportent des lèvres latérales 37 aptes à s'engager entre la paroi de fond 1 du rail et ses ailes 3.

Le levier de manoeuvre 12 comporte deux joues 40. Chaque joue 40 possède un trou 41 pour le passage de l'axe 24 de manière à articuler le levier 12 sur l'embase 10. Chaque joue 40 possède en outre un trou 42 pour le passage d'un axe 43 agencé pour se déplacer dans la fente allongée 32.

Le levier 12 comporte en outre deux crochets 44 dont les pointes sont orientées vers l'avant dans le sens de rotation de fermeture du levier, et du côté opposé au rail. Chaque joue 40 possède en outre une butée 45 orientée comme les pointes des crochets pour coopérer avec les joues 18 de l'embase 10 en bout de course de rotation du levier.

Un ressort à lame 50 en forme de T a l'extrémité de sa tige 51 fixée par une vis 52 sur l'embase 10. Chaque côté 53 de la barre du T est agencée pour coopérer avec un crochet 44.

L'organe de déverrouillage 22 est constitué d'un cylindre muni dans sa partie centrale d'un méplat 60 agencé pour coopérer avec la tige 51 du ressort à lame 50 en formant une came excentrique. Un orifice d'extrémité 61 de section hexagonale permet d'entraîner l'organe 22 en rotation à l'aide d'une clé.

Le dispositif qui vient d'être décrit fonctionne de la manière suivante.

Les deux plongeurs 20a et 20b ont chacun une forme en plan qui lui permet de s'engager individuellement dans un emplacement élargi 6 entre deux encoches 5 en vis-à-vis. Leur distance entre eux leur permet par ailleurs se s'y engager simultanément ; elle est ici égale à deux pas d'encoches 5 de sorte que les deux plongeurs 20 laissent un emplacement élargi 5 vide entre eux. Enfin, la forme transversale des plongeurs 20 leur interdit toute translation longitudinale lorsqu'ils sont engagés et bloqués dans cette direction par les saillies de matière des ailes 3 entre deux encoches 5.

De même, la forme en plan de chaque saillie 36 lui permet de s'engager individuellement dans un emplacement élargi 6 entre deux encoches 5 en vis-à-vis. Leur distance entre eux leur permet par ailleurs se s'y engager simultanément ; elle est ici égale à un pas d'encoches 5 de sorte que les trois saillies 36 peuvent s'engager dans trois emplacements élargis successifs 5. Enfin, du fait de la forme transversale en T inversé des saillies 36, celles-ci peuvent coulisser le long du rail lorsqu'elles sont engagées dans la rainure 4 de ce dernier.

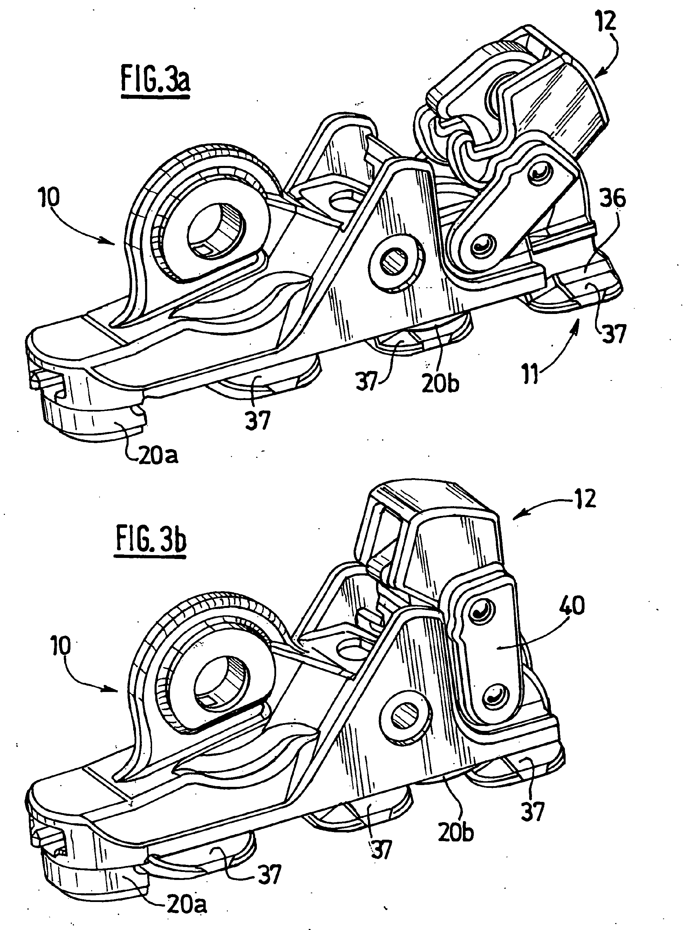

Lorsque le dispositif est en position ouverte représentée à la figure 3a, avec la glissière 35 engagée dans la rainure 25, la saillie 36 centrale se loge sous le plongeur 20b, du fait de la moindre extension de ce dernier. Dans cette position, le dispositif peut donc s'engager dans quatre emplacements élargis successifs 6 du rail, position où il est bloqué longitudinalement par les plongeurs 20.

Pour bloquer le dispositif perpendiculairement à la paroi de fond du rail, on fait pivoter le levier de manoeuvre 12 autour de l'axe 23, ce qui a pour effet de déplacer le coulisseau 11 en direction du plongeur 20a, l'embase 10 restant fixe et l'axe 43 se déplaçant dans les fentes allongées 32. Lorsque les butées 45 viennent au contact des joues 18 respectives, les saillies 36 se trouvent aux niveaux de trois emplacements rétrécis successifs 7 où ils sont bloqués par les saillies de matière des ailes 3 entre deux encoches successives 5. Le dispositif est alors dans sa position fermée représentée à la figure 3b.

Dans cette dernière position, l'axe 43 est en appui sur la butée élastique 34 qui, de ce fait, est en compression, ce qui a pour effet de rattraper les jeux entre l'embase 10 et le coulisseau 11 et entre ces deux éléments et le rail.

Par ailleurs, au cours du déplacement du coulisseau, la pointe des crochets 44 a écarté le ressort à lame 50 du fait de la forme incurvée des côtés 53 du ressort. Lorsque le dispositif arrive en position fermée, les côtés 53 retombent derrière les crochets 44 et la tige 51 sur le méplat 60 de l'organe 22, verrouillant ainsi le levier 12 et donc l'ensemble du dispositif.

On observe à la figure 4 que la position relative des crochets 44 et du ressort 50, et donc l'état de verrouillage du dispositif, sont visibles.

Pour déverrouiller le dispositif, il suffit de faire pivoter l'organe 22 à l'aide d'une clé convenable. L'organe 22 repousse alors la tige 51 du ressort 50 et dégage ainsi ce dernier des crochets 44.

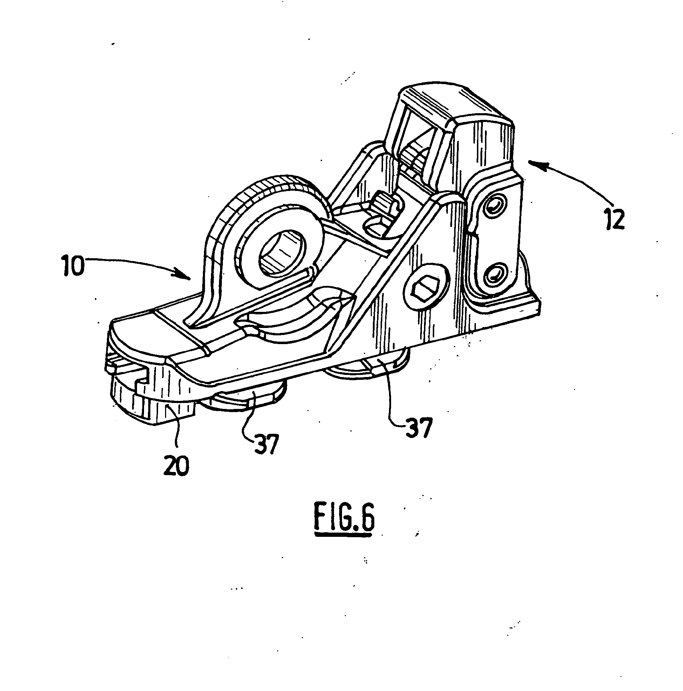

La figure 6 représente une variante dans laquelle l'embase 10 ne comporte qu'un seul plongeur 20 et le coulisseau 11 ne comporte que deux saillies 36.

## Revendications

1. - Dispositif de montage d'un siège sur un rail de montage, ledit rail comprenant une paroi de fond (1), deux parois latérales (2) et deux ailes (3) qui délimitent une rainure (4) en forme de T inversé, lesdites ailes formant à des intervalles réguliers des encoches (5) délimitant une alternance d'emplacements (6) où le passage entre les bords des ailes est élargi et d'emplacements (7) où le passage entre les bords des ailes est rétréci, ledit dispositif comprenant
- une embase (10) munie de moyens de liaison à un siège (16) et d'au moins un plongeur (20) de blocage longitudinal apte à s'engager dans un desdits emplacements (6) où le passage est élargi mais pas à se déplacer longitudinalement dans un emplacement (7) où le passage est rétréci ;
- un coulisseau (11) muni de saillies (36) comportant des lèvres latérales (37), ledit coulisseau étant agencé pour coulisser par rapport à ladite embase avec lesdites saillies dans ledit rail, entre une position de mise en place où lesdites lèvres peuvent s'engager dans un desdits emplacements où le passage est élargi lorsque le plongeur de l'embase est dans un tel emplacement, et une position de blocage où lesdites lèvres sont retenues par lesdites ailes dans un emplacement où le passage est rétréci ;
**caractérisé par le fait qu'il comprend :**
- un levier de manoeuvre (12) articulé sur ladite embase et sur ledit coulisseau, l'une au moins des articulations s'effectuant à l'aide d'un axe (43) monté sur l'un des éléments articulés et coulissant dans une fente allongée (32) de l'autre élément, ledit levier étant ainsi mobile entre une position d'ouverture où le coulisseau est dans sa position de mise en place et une position de fermeture où le coulisseau est dans sa position de blocage ;
- des moyens de verrouillage (44, 50) pour verrouiller ledit levier dans sa position de fermeture.

2. - Dispositif selon la revendication 1, comportant des moyens (33, 34) de rattrapage de jeu pour rattraper les jeux existant entre le rail et le dispositif lorsque le coulisseau passe de sa position de mise en place à sa position de blocage.

3. - Dispositif selon la revendication 2, dans lequel lesdits moyens de rattrapage de jeu comprennent une butée élastique (33) pour ledit axe coulissant.

4. - Dispositif selon la revendication 3, dans lequel ladite butée élastique est disposée dans un élargissement (33) à l'extrémité de ladite fente allongée où se déplace ledit axe coulissant lorsque ledit coulisseau arrive dans sa position de blocage.

5. - Dispositif selon l'une quelconque des revendications 1 à 4, dans lequel lesdits moyen de verrouillage comprennent une lame élastique (50) montée sur l'embase et apte à coopérer avec au moins un crochet solidaire du levier de manoeuvre.

6. - Dispositif selon l'une quelconque des revendications 1 à 5, comprenant des moyens de déverrouillage (22) pour déverrouiller ledit levier de sa position de fermeture.

7. - Dispositif selon l'ensemble des revendications 5 et 6, dans lequel lesdits moyens de déverrouillage comprennent une came (60) qui, dans une de ses positions, permet à la lame élastique de reposer au fond dudit crochet, et dans une autre position, repousse la lame élastique à l'extérieur du crochet.

8. - Dispositif selon la revendication 7, dans lequel ladite came est un excentrique susceptible d'être entraîné en rotation à l'aide d'une clé entre ses dites positions.

9. - Aéronef **caractérisé par le fait que** ses sièges sont montés à l'aide d'un dispositif selon l'une quelconque des revendications 1 à 8.

## Claims

1. A device for mounting a seat on a mounting rail, said rail including a bottom wall (1), two side walls (2) and two wings (3) which define a groove (4) in the form of a reversed T, said wings forming, at regular intervals, notches (5) defining alternate locations (6) where the passage between the wing edges is widened and locations (7) where the passage between the wing edges is reduced, said device including:
- a base (10) provided with means for the connection to a seat (16) and at least a longitudinal locking plunger (20) capable of engaging into one of said locations (6) when the passage is widened, but incapable of moving longitudinally at a location (7) where the passage is reduced;
- a traveller (11) provided with protrusions (36) including side lips (37), said traveller being so arranged as to slide with respect to said base, with said protrusions remaining in said rail, from a fitting position where said lips can engage into one of said locations where the passage is widened when the base plunger is at such location, to a locking position where said lips are held by said wings at a location where the passage is reduced;
**characterized in that** it includes:
- an operating lever (12) jointed on said base and on said traveller, at least one of the joints being provided by a pin (43) mounted on one of the jointed elements and sliding in an elongated slot (32) of the other element, said lever thus being movable from an opening position where the traveller is in the fitting position thereof to a closing position where the traveller is in the locking position thereof;
- locking means (44, 50) for locking said lever in the closing position thereof.

2. A device according to claim 1, including clearance compensation means (33, 34) for compensating the clearance between the rail and the device when the traveller moves from the fitting position thereof to the locking position thereof.

3. A device according to claim 2, wherein said clearance compensating means include a flexible stop (33) for said sliding pin.

4. A device according to claim 3, wherein said flexible stop is positioned in a widened part (33) at the end of said elongated slot, wherein said sliding pin moves when said traveller reaches the locking position thereof.

5. A device according to any one of claims 1 to 4, wherein said locking means include a spring plate (50) mounted on the base and capable of cooperating with at least a hook made integral with the operating lever.

6. A device according to any one of claims 1 to 5, including unlocking means (22) for unlocking said lever from the closing position thereof.

7. A device according to the set of claims 5 and 6, wherein said unlocking means include a cam (60) which, in one of the positions thereof, enables the spring plate to rest at the root of said hook and in another position, pushes the spring plate outside the hook.

8. A device according to claim 7, wherein said cam is an eccentric likely to be driven into rotation using a key between said positions thereof.

9. An aircraft **characterized in that** the seats thereof are mounted using a device according to any one of claims 1 to 8.

## Patentansprüche

1. - Vorrichtung für die Montage eines Sitzes auf eine Montageschiene, wobei die besagte Schiene eine Bodenwand (1), zwei Seitenwände (2) und zwei Flügel (3) umfaßt, die eine Rille (4) in Form eines umgekehrten T abgrenzen, wobei die besagten Flügel in gleichmäßigen Abständen Kerben (5) bilden, die eine Abwechslung von Stellen (6) abgrenzen, wo der Durchgang zwischen den Kanten der Flügel erweitert ist, und Stellen (7), wo der Durchgang zwischen den Kanten der Flügel verengt ist, wobei die besagte Vorrichtung folgende Elemente umfaßt:
- Eine Befestigungsfläche (10), die mit Verbindungsmitteln mit einem Sitz (16) versehen ist, und mit mindestens einem länglichen Sperrfuß (20), der geeignet ist, in eine der besagten Stellen (6) einzugreifen, wo der Durchgang erweitert ist, sich aber nicht in Längsrichtung in eine Stelle (7) zu verschieben, wo der Durchgang verengt ist;
- Einen Schlitten (11), der mit Vorsprüngen (36) versehen ist, die seitliche Lippen (37) umfassen, wobei der besagte Schlitten so gestaltet ist, daß er im Verhältnis zur besagten Befestigungsfläche mit den besagten Vorsprüngen in besagter Schiene zwischen einer Einrichtungsposition, in der die besagten Lippen in eine der besagten Stellen eingreifen können, wo der Durchgang erweitert ist, wenn der Fuß der Befestigungsfläche in einer solchen Stelle ist, und einer Sperrposition, wo die besagten Lippen von den besagten Flügeln in einer Stelle zurückgehalten werden, wo der Durchgang verengt ist, gleitet;
**Dadurch gekennzeichnet, daß** sie folgende Elemente umfaßt:
- Einen Betätigungshebel (12), der gelenkig an der besagten Montagefläche und auf dem besagten Schlitten befestigt ist, wobei zumindest eine der gelenkigen Befestigungen mit Hilfe einer Achse (43) hergestellt wird, die auf eines der gelenkig befestigten Elemente montiert ist und in einem verlängerten Schlitz (32) des anderen Elements gleitet; wobei der besagte Hebel somit mobil ist zwischen einer Öffnungsposition, in der der Schlitten in seiner Einrichtungsposition ist, und einer Verschlußposition, in der der Schlitten in seiner Sperrposition ist;
- Verriegelungsmittel (44, 50) zum Verriegeln des besagten Hebels in seiner Verschlußposition.

2. - Vorrichtung nach Anspruch 1, wobei sie Mittel (33, 34) zum Ausgleich des Spiels umfaßt, das zwischen der Schiene und der Vorrichtung besteht, wenn der Schlitten von seiner Einrichtungsposition in seine Sperrposition übergeht.

3. - Vorrichtung nach Anspruch 2, wobei die besagten Mittel zum Ausgleich des Spiels einen elastischen Anschlag (33) für die besagte gleitende Achse umfassen.

4. - Vorrichtung nach Anspruch 3, wobei der besagte elastische Anschlag in einer Erweiterung (33) am Ende des besagten länglichen Schlitzes angeordnet ist, in der sich die besagte Gleitachse verschiebt, wenn der besagte Schlitten in seiner Sperrposition ankommt.

5. - Vorrichtung nach einem beliebigen der vorstehenden Ansprüche 1 bis 4, wobei die besagten Verriegelungsmittel eine elastische Feder (50) umfassen, die auf der Montagefläche montiert und geeignet ist, mit mindestens einem fest mit dem Betätigungshebel verbundenen Haken zusammenzuwirken.

6. - Vorrichtung nach einem beliebigen der vorstehenden Ansprüche 1 bis 5, wobei sie Entriegelungsmittel (22) zum Entriegeln des besagten Hebels aus seiner Verschlußposition umfaßt.

7. - Vorrichtung nach den beiden vorstehenden Ansprüchen 5 und 6, wobei die besagten Entriegelungsmittel einen Nocken (60) umfassen, der in einer seiner Positionen ermöglicht, daß die elastische Feder am Boden des besagten Hakens ruht, und in einer anderen Position die elastische Feder aus dem Haken drückt.

8. - Vorrichtung nach Anspruch 7, wobei der besagte Nocken ein Exzenter ist, der mit einem Schlüssel zwischen seinen besagten Positionen in Drehung versetzt werden kann.

9. - Luftfahrzeug, **dadurch gekennzeichnet, daß** seine Sitze mit einer Vorrichtung nach einem beliebigen der vorstehenden Ansprüche 1 bis 8 montiert sind.
